# EUROPÄISCHE PATENTANMELDUNG

(11) **EP 2 514 731 A1**
(43) Veröffentlichungstag der Anmeldung: **24.10.2012**
(21) Anmeldenummer: 12002778.4
(22) Anmeldetag: 20.04.2012
(51) Int. Cl.: C04B 18/28, C04B 20/10, C04B 28/02, B27K 3/16, E04B 1/94

(54) **Holzwolle-Leichtbauelement**

(30) Priorität: 20.04.2011 DE 102011018301
(71) Anmelder: Knauf Insulation, 4600 Visé (BE)
(72) Erfinder: Moser, Günter, 9500 Villach (AT); Gez, Daniel, 94051 Hauzenberg (DE); Gasser, Karl-Heinz, 9712 Fresach (AT); Grießer, Horst, 9712 Fresach (AT); Seiler, Albert, 9710 Feistritz/Drau (AT)
(74) Vertreter: Müller-Boré & Partner Patentanwälte

(57) **Zusammenfassung**

Die vorliegende Erfindung betrifft ein Holzwolle-Leichtbauelement (HWL-Element), welches insbesondere durch eine äußerst geringe Brennbarkeit gekennzeichnet ist, und ein Verfahren zu dessen Herstellung.

## Beschreibung

Die vorliegende Erfindung betrifft ein Holzwolle-Leichtbauelement (HWL-Element), welches insbesondere durch eine geringe Brennbarkeit gekennzeichnet ist, die den Erfordernissen der Klasse A1 gemäß der Norm EN 13501-1 genügt, und ein Verfahren zu dessen Herstellung.

Nach der Norm EN 13501-1 (2009) werden Bauelemente, wie beispielsweise HWL-Elemente, in verschiedene Brennbarkeitsklassen eingeteilt. Diese Einteilung beinhaltete die Klassen A1 (nicht brennbar, ohne organische Anteile) und A2 (nicht brennbar, mit organischen Anteilen), als auch die Klassen B bis F, welche schwer entflammbare bis leicht entflammbare Materialien betreffen.

Es ist dabei wünschenswert, Bauelemente herzustellen, welche eine möglichst geringe Brennbarkeit aufweisen. Im Stand der Technik sind zwei grundsätzliche Verfahren bekannt, um die Brennbarkeit eines HWL-Elements herabzusetzen.

Beispielsweise beschreibt EP 1 125 903 B1, dass HWL-Elemente mit geringer Brennbarkeit durch Imprägnieren der verwendeten Holzwollefasern mit einem Flammschutzmittel erhalten werden können. Desweiteren wurden Holzwolle-Leichtbauelemente hergestellt, welche einen Anteil an nicht brennbaren Substanzen enthalten und somit ebenfalls verbesserte Brandschutzeigenschaften aufweisen.

Ferner beschreibt FR 1 294 733 A ein Verfahren zur Herstellung eines Bauproduktes, in welchem Bariumchlorid als Flammschutzmittel in eine Mischung aus Zellulosematerial und Zement zugemischt wird, jedoch wird durch Einmischen des Flammschutzmittels in das Bindemittelsystem ein nur unzureichender Brandschutz erzielt.

Darüber hinaus wurde die Brennbarkeit von Holzwolle-Leichtbauelementen durch hinzufügen von nicht brennbaren inerten Materialien, wie beispielsweise Sand, herabgesetzt (vgl. beispielsweise EP 1 369 539, DE 10 224639).

Sämtliche im Stand der Technik bekannten Holzwolle-Leichtbauelemente erfüllen jedoch höchstens die Erfordernisse der Brandschutzklasse A2 gemäß DIN B1 gemäß EN 13501-1 und sind somit nicht uneingeschränkt im Bau einsetzbar.

Der vorliegenden Erfindung liegt somit die Aufgabe zugrunde, ein HWL-Element, welches verbesserte Brandschutzeigenschaften aufweist und somit den Erfordernissen der Brandschutzklasse A1 gemäß EN 13501-1 genügt, als auch ein Verfahren zu dessen Herstellung bereitzustellen.

Diese Aufgabe wird gemäß der vorliegenden Erfindung durch Bereitstellen eines Holzwolle-Leichtbauelement, umfassend (i) Holzwollefasern, (ii) eine Bindemittelzusammensetzung, und (iii) mindestens einen nicht brennbaren inerten Füllstoff, wobei die Holzwollefasern mit mindestens einem Flammschutzmittel imprägniert sind, gelöst.

Gemäß der vorliegenden Erfindung unterliegt der Begriff "Holzwolle-Leichtbauelement" keiner spezifischen Einschränkung und schließt sämtliche auf Holzwollefasern basierenden Bauelemente ein. Dabei bezieht sich der allgemeine Ausdruck "Holzwollefasern" auf organisches Fasermaterial, welches beispielsweise Holzfasern, Holzwolle und Zellulose einschließt.

Die Ausdrücke "Leichtbauelement" und "Bauelement" werden hierin synonym verwendet und schließen jegliche Art eines geformten Erzeugnisses ein, beispielsweise eine Platte. Die Holzwollefasern weisen üblicherweise eine Länge von mehr als 8 cm, eine Breite von 1 bis 6 mm und eine Dicke von 0,2 bis 0,5 mm auf. Die in unregelmässiger Geometrie angeordneten, spröden Holzwollefasern liegen innerhalb des Bauelementes in Form eines offenporigen, dreidimensionalen Gerüstes verteilt vor und sind zumindest abschnittsweise untereinander über ein Bindemittel, beispielsweise ein magnesitisches Bindemittel, verbunden.

Der Ausdruck "Bindemittelzusammensetzung" betrifft insbesondere eine Zusammensetzung, welche mindestens ein Bindemittel enthält und geeignet ist, die Holzwollefasern zumindest abschnittsweise untereinander zu verbinden und wird hierin sowohl mit Bezug auf die anwendungsbereite Zusammensetzung als auch die im Endprodukt abgebundene Zusammensetzung verwendet. Als geeignete Bindemittelsysteme kommen alle bekannten hydraulischen Bindemittel sowie deren notwendige Bindungspartner in Betracht. Beispielsweise können neben kaustisch gebranntem Magnesit auch verschiedene Zemente und Gipse, sowie deren Gemische in unterschiedlichen Mengenverhältnissen gemäß der vorliegenden Erfindung verwendet werden. Diese erfindungsgemäß verwendeten Bindemittelsysteme können darüber hinaus Beschleuniger und Bindungspartner, sowie zusätzliche Zuschlagstoffe enthalten.

Der Begriff "nicht brennbarer inerter Füllstoff" wie hierin verwendet unterliegt keiner spezifischen Einschränkung und schließt sämtliche natürliche und synthetische nicht oder nur sehr schwer entflammbaren Materialien, wie Sand, Kies, Metall, Mineralien und Ähnliches ein.

Der Ausdruck "Flammschutzmittel" wie hierin verwendet schließt sämtliche Mittel ein, die zur Imprägnierung der Holzwollefasern geeignet sind. Dabei betrifft der Ausdruck "Imprägnieren" die Behandlung der Holzwollefasern mit einem flüssigen, gasförmigen oder festen Flammschutzmittel oder einer ein solches Flammschutzmittel enthaltenden Lösung oder Dispersion. Gemäß der vorliegenden Erfindung beinhaltet der Begriff "Imprägnieren" somit auch die oberflächliche Behandlung der Holzwollefasern, beispielsweise mit einer Lösung oder einem Feststoff.

Eine weitere Ausführungsform der vorliegenden Erfindung betrifft das wie vorstehend definierte Holzwolle-Leichtbauelement, wobei der mindestens eine nicht brennbare inerte Füllstoff aus natürlichen und künstlichen Füllstoffen, sowie deren Kombinationen ausgewählt ist, wobei die natürlichen Füllstoffe aus der Gruppe, bestehend aus Schwerspat, Magnetit, Hämatit, Limonit, Ilmenit, Serptentin, Flußsand, Flußkies, Grubenkies, Brechsand, Splitt, Steinschlag, Schotter aus gesundem Naturstein, sehr feinen Natursanden, Naturbims, Lavakies, Lavasand, Kieselgur, Schaumlava und Tuffen, sowie deren Kombinationen, ausgewählt sind, und wobei die künstlichen Füllstoffe aus der Gruppe, bestehend aus Stahlschrott, Stahlspänen, Stahlsand, Sintererzen, Ferrosilizium, Ferrophosphor, Metallschlacken, Betonklinkerbruch, künstlichem Korund, Siliziumcarbid, Sintersplitt, Blähperlit, Blähgraphit, Blähglimmer, Blähschiefer, Blähton, Diatomit, Ziegelsplitt, Steinkohlenschlacken, Steinkohlenflugaschen, Müllschlacken, granuliertem HOS, Hüttenbims, Sinterbims und Schaumkunststoffen, sowie deren Kombinationen, ausgewählt sind.

Dabei können die natürlichen Füllstoffe in ihrer natürlichen Körnung oder in mechanisch zerkleinerter Form zugegeben werden. Eine beispielhafte Übersicht über natürliche und künstliche Füllstoffe, welche gemäß der vorliegenden Erfindung Verwendung finden können, sind in der nachfolgenden Tabelle 1 aufgeführt.

**Tabelle 1**

| natürliche Zuschläge | | künstliche Zuschläge (einschließlich Recycling-produkte) |
|---|---|---|
| natürlich gekörnt | mechanisch zerkleinert | |
| Schwerspat (Baryt BaSO₄) | gebrochener Schwerspat, | Stahlschrott, Stahlspäne, |
| | Magnetit, | Stahlsand, Sintererze, |
| Magnetit (Fe₃O₄) | Hämatit (Fe₂O₃), | Ferrosilizium, |
| | Limenit (FeTiO₃), | Ferrophosphor, |
| | Serptentin (Mg[(OH)₄Si₂O₅]) | Schmermetallschlacke |
| Flußsand | Brechsand, Splitt, | Metallschlacken, |
| Flußkies | Steinschlag, | Betonklinkerbruch, |
| Grubenkies | Schotter aus gesundem | künstlicher Korund, |
| | Naturstein | Siliziumcarbid, Sintersplitt |
| sehr feine Natursande, | gebrochene Schaumlava, | Blähperlit (geblähter Obsidian), |
| Naturbims, Lavakies, | gebrochene Tuffe | |
| Lavasand (Lapilis), | | Blähglimmer (Vermiculite), |
| Kieselgur | | Blähschiefer, Blähton, |
| | | Diatomit (gesint. Kieselgur), |
| | | Ziegelsplitt, |
| | | Steinkohlenschlacke, |
| | | Steinkohlenflugasche, |
| | | Müllschlacke, |
| | | granuliete HOS, |
| | | Güttenbims, Sinterbims, |
| | | Schaumkunststoffe |

Eine weitere Ausführungsform betrifft ein Holzwolle-Leichtbauelement wie vorstehend definiert, wobei das mindestens eine Flammschutzmittel aus halogenierten Flammschutzmitteln, Stickstoff-basierten Flammschutzmitteln, Organophosphor-Flammschutzmitteln und anorganischen Flammschutzmitteln ausgewählt ist.

Eine weitere Ausführungsform der vorliegenden Erfindung betrifft ein wie vorstehend definiertes HWL-Element, wobei das halogenierten Flammschutzmittel aus der Gruppe, bestehend aus polybromierten Diphenylethern, Tetrabrombisphenol A (TBBPA), Hexabromcyclododecan (HBCD), und Chlorparaffinen, oder Kombinationen davon, ausgewählt ist, das Stickstoff-basierte Flammschutzmittel aus der Gruppe, bestehend aus Melamin und Harnstoffen, oder Kombinationen davon, ausgewählt ist, das Organophosphor-Flammschutzmittel aus der Gruppe, bestehend aus Tris(chlorethyl)phosphat (TCEP), Tri(chlorpropyle)phosphat (TCPP), Tris(dichlorisopropyl)phosphat (TDCPP), Triphenylphosphat (TPP), Tris(2-ethylhexyl)phosphat (TEHP) und Trikresolphosphat (TKP), oder Kombinationen davon, ausgewählt ist, und das anorganische Flammschutzmittel aus der Gruppe, bestehend aus Aluminiumhydroxid, Magnesiumhydroxid, Ammoniumphosphat, Ammoniumpolyphosphat, Ammoniumsulfat, Trinatriumphosphat, Hexametaphosphat, Dipentaerythydrit, oder Kombinationen davon, ausgewählt.

Eine weitere Ausführungsform der vorliegenden Erfindung betrifft das Holzwolle-Leichtbauelement wie vorstehend definiert, umfassend Holzwollefasern in einer Menge von 10 bis 65 Gew.-%, Bindemittelzusammensetzung in einer Menge von 2 bis 60 Gew.-%, nicht brennbare inerte Füllstoffe in einer Menge von 3 bis 65 Gew.-% und Flammschutzmittel in einer Menge von 0,1 bis 35 Gew.%, jeweils bezogen auf das Gesamtgewicht des Holzwolle-Leichtbauelements.

Die Menge an Holzwollefasern kann hierbei variiert werden, um ein Holzwolle-Leichtbauelement herzustellen, welches beispielsweise eine bestimmte Dämmleistung oder eine gewünschte Rohdichte aufweist. Beispielsweise kann das HWL-Element der vorliegenden Erfindung Holzwollefasern in einer Menge von 15 bis 60 Gew.-%, 20 bis 55 Gew.-% oder 25 bis 50 Gew.-%, jeweils bezogen auf das Gesamtgewicht des HWL-Elements enthalten.

Desweiteren ist die im erfindungsgemäßen HWL-Element enthaltene Menge an Bindemittelzusammensetzung variabel und kann beispielsweise 5 bis 50 Gew.-%, 7 bis 45 Gew.-% oder 10 bis 35 Gew.-% betragen, jeweils bezogen auf das Gesamtgewicht des HWL-Elements.

Die Menge des verwendeten, mindestens einen nicht brennbare inerte Füllstoffs kann an die unterschiedlichen Anforderungen des zu erhaltenden HWL-Elements angepasst werden und beispielsweise 5 bis 60 Gew.-%, 8 bis 55 Gew.-% oder 15 bis 50 Gew.-% betragen.

Eine weitere Ausführungsform der vorliegenden Erfindung betrifft ein HWL-Element wie vorstehend definiert, wobei das Bindemittel kaustischen Magnesit, Portlandzement, Tonerdezement, Weißzement, Gips, Ecose^{®}, Kunstharze, oder Kombinationen davon, und gegebenenfalls einen oder mehrere Reaktionsbeschleuniger, Bindungspartner und/oder Fließmittel enthalten kann.

Gemäß der vorliegenden Erfindung kann das Bindemittel eine einzelnes Bindemittel, wie kaustischer Magnesit oder ein Kunstharz sein, oder aus einer Kombination verschiedener Bindemittel zusammengesetzt sein. Hierdurch wird ermöglicht, erwünschte Bindungseigenschaften, Rohdichten und weitere physikalische erwünschte Eigenschaften einzustellen.

Gemäß einer weiteren erfindungsgemäßen Ausführungsform weist das vorstehend definierte Holzwolle-Leichtbauelement eine Rohdichte im Bereich von 150 kg/m³ bis 1000 kg/m³ auf. Die Rohdichte des erfindungsgemäßen HWL-Elements kann beispielsweise im Bereich von 270 kg/m³ bis 900 kg/m³, 200 kg/m³ bis 800 kg/m³ oder 250 kg/m³ bis 700 kg/m³ liegen.

Eine weitere Ausführungsform der vorliegenden Erfindung betrifft ein wie vorstehend definiertes Holzwolle-Leichtbauelement, wobei das Holzwolle-Leichtbauelement die Anforderungen der Brandklasse A1 gemäß EN 13501-1 (2009) erfüllt.

Ein weiterer Aspekt der vorliegenden Erfindung betrifft ein Verfahren zur Herstellung eines Holzwolle-Leichtbauelements wie vorstehend definiert, umfassend die Schritte (a) Bereitstellen von Holzwollefasern, (b) Imprägnieren der Holzwollefasern mit mindestens einem Flammschutzmittel, (c) Hinzufügen von mindestens einem nicht brennbaren inerten Füllstoff, (d) Hinzufügen einer Bindemittelzusammensetzung und (e) Pressen der unter Schritt (d) erhaltenen behandelten Holzwollefasern unter Einwirkung von Wärme, wobei der Schritt (b) des Imprägnierens der Holzwollefasern mit dem mindestens einen Flammschutzmittel vor Schritt (c) und/oder nach Schritt (e) des vorstehend definierten Verfahrens durchgeführt werden kann.

Gemäß der vorliegenden Erfindung kann der Schritt des Imprägnierens der Holzwollefasern mit dem mindestens einen Flammschutzmittel einerseits vor der Herstellung des HWL-Elements erfolgen, anderseits kann das mindestens eine Flammschutzmittel auch in das fertig konfektionierte HWL-Element eingebracht werden. Das nachträgliche Einbringen des Flammschutzmittels kann hierbei durch entsprechende Vorrichtungen bewirkt werden, die beispielsweise durch Druck- und/oder Temperaturunterschiede die Imprägnierung der Holzwollefasern ermöglichen.

Die im erfindungsgemäßen Verfahren zu verwendenden Bindemittelzusammensetzungen, nicht brennbaren inerten Füllstoffe, als auch Flammschutzmittel entsprechen den vorstehenden Definitionen.

In einer weiteren Ausführungsform wird im vorstehend definierten Verfahren ein HWL-Element hergestellt, welches Holzwollefasern in einer Menge von 10 bis 65 Gew.-%, Bindemittelzusammensetzung in einer Menge von 2 bis 60 Gew.-%, nicht brennbare inerte Füllstoffe in einer Menge von 3 bis 65 Gew.-% und Flammschutzmittel in einer Menge von 0.1 bis 35 Gew.%, jeweils bezogen auf das Gesamtgewicht des Holzwolle-Leichtbauelements, umfasst.

Gemäß der vorliegenden Erfindung kann die zu verwendende Menge an Bindemitteln derart eingestellt werden, dass eine gewünschte Festigkeitsklasse sowie ein spezifischer Anteil an offenen Poren erhalten werden kann.

Dabei können die Bindemittelzusammensetzung, der mindestens eine nicht brennbare inerte Füllstoff, als auch das mindestens eine Flammschutzmittel weitere Komponenten enthalten, welche die Verwendung dieser Komponenten in dem vorstehenden Verfahren vereinfachen oder begünstigen. Diese Zusätze können im Produkt verbleiben oder im Verlaufe des Verfahrens wieder entfernt werden. Beispielsweise kann die Bindemittelzusammensetzung, welche üblicherweise in Form einer Dispersion auf die Holzwollefasern aufgebracht wird, Wasser in einer Menge von 15 bis 55 Gew.-% enthalten.

Zur Imprägnierung der Holzwollefasern können Lösungen der vorstehend genannten Flammschutzmittel beispielsweise in Konzentrationen zwischen 5 und 50 %, typischerweise in Konzentrationen von 25 bis 35 % eingesetzt werden, wobei wässrige Lösungen verwendet werden können. Die Viskosität einer solchen Lösung bei 20°C liegt beispielsweise im Bereich von 0,001 P (dPas) bis 0,1 P.

Die Dauer der Imprägnierung hängt beispielsweise von der Konzentration des Flammschutzmittels in der Imprägnierungslösung, der Größe der Holzwollefasern, der Temperatur und weiteren Faktoren ab und beträgt beispielsweise 60 Sekunden bis 60 Minuten, 2 bis 10 Minuten oder 3 bis 8 Minuten.

Ein weiterer Aspekt der vorliegenden Erfindung betrifft ein Holzwolle-Leichtbauelement, welches durch das wie vorstehend definierte Verfahren erhältlich ist.

Gemäß der vorliegenden Erfindung betrifft ein weiter Aspekt ein Verbundelement, umfassend mindestens zwei Schichten, wobei mindestens eine Schicht ein wie vorstehend definiertes Holzwolle-Leichtbauelement ist.

Das Verbundelement der vorliegenden Erfindung kann dabei zwei oder mehrere Schichten aufweisen, deren Schichtabfolge keiner besonderen Einschränkung unterliegt, solange mindestens eine dieser Schichten ein wie vorstehend definiertes HWL-Element ist.

Die Gesamtdicke des Verbundelements kann dabei 3 mm bis 500 mm betragen. Beispiele für mögliche Untergrenzen der Gesamtdicke des Verbundelements sind 15 mm, 20 mm, 30 mm oder 50 mm, wobei die Obergrenze der Gesamtdicke des Verbundelements beispielsweise 300 mm, 400 mm oder 500 mm betragen kann.

Eine weitere Ausführungsform betrifft ein Verbundelement wie vorstehend definiert, wobei die mindestens zweite Schicht ein nicht brennbares Dämmmaterial ist, ausgewählt aus der Gruppe, bestehend aus Glaswolle, Steinwolle und Keramikfasern, sowie anorganischen Schaummaterialien wie Silikatschäumen, Vermiculiten, Blähton, Bims, Keramikschäumen, Kieselsäuren und Aerogelen.

Das Holzwolle-Leichtbauelement der vorliegenden Erfindung weist aufgrund der Kombination von nicht brennbaren inerten Füllstoffen und mit Flammschutzmittel imprägnierten Holzwollefasern gegenüber den im Stand der Technik bekannten HWL-Elementen überlegene Brandschutzeigenschaften auf. Das erfindungsgemäße HWL-Element kann hierbei insbesondere die Erfordernisse der Brandschutzklasse A1 gemäß EN 13501-1 (2009) erfüllen und steht somit einer Vielzahl von Anwendungen im Bau zur Verfügung. Ebenso ermöglicht das erfindungsgemäße Verfahren die Herstellung eines entsprechenden Holzwolle-Leichtbauelements auf einfache und effiziente Art und Weise und ist im Wesentlichen zu den im Stand der Technik bekannten Verfahren kompatibel.

## Patentansprüche

1. Holzwolle-Leichtbauelement, umfassend
(i) Holzwollefasern,
(ii) eine Bindemittelzusammensetzung, und
(iii) mindestens einen nicht brennbaren inerten Füllstoff,
wobei die Holzwollefasern mit mindestens einem Flammschutzmittel imprägniert sind.

2. Holzwolle-Leichtbauelement nach Anspruch 1, wobei der mindestens eine nicht brennbare inerte Füllstoff aus natürlichen und künstlichen Füllstoffen, sowie deren Kombinationen ausgewählt ist,
wobei die natürlichen Füllstoffe aus der Gruppe, bestehend aus Schwerspat, Magnetit, Hämatit, Limonit, Ilmenit, Serptentin, Flußsand, Flußkies, Grubenkies, Brechsand, Splitt, Steinschlag, Schotter aus gesundem Naturstein, sehr feinen Natursanden, Naturbims, Lavakies, Lavasand, Kieselgur, Schaumlava und Tuffen, sowie deren Kombinationen, ausgewählt sind, und
wobei die künstlichen Füllstoffe aus der Gruppe, bestehend aus Stahlschrott, Stahlspänen, Stahlsand, Sintererzen, Ferrosilizium, Ferrophosphor, Metallschlacken, Betonklinkerbruch, künstlichem Korund, Siliziumcarbid, Sintersplitt, Blähperlit, Blähglimmer, Blähschiefer, Blähton, Diatomit, Ziegelsplitt, Steinkohlenschlacken, Steinkohlenflugaschen, Müllschlacken, granuliertem HOS, Hüttenbims, Sinterbims und Schaumkunststoffen, sowie deren Kombinationen, ausgewählt sind.

3. Holzwolle-Leichtbauelement nach Anspruch 1 oder 2, wobei das mindestens eine Flammschutzmittel aus halogenierten Flammschutzmitteln, Stickstoff-basierten Flammschutzmitteln, Organophosphor-Flammschutzmiteln und anorganischen Flammschutzmitteln ausgewählt ist.

4. Holzwolle-Leichtbauelement nach Anspruch 3, wobei
das halogenierten Flammschutzmittel aus der Gruppe, bestehend aus polybromierten Diphenylethern, Tetrabrombisphenol A (TBBPA), Hexabromcyclododecan (HBCD), und Chlorparaffinen, oder Kombinationen davon, ausgewählt ist,
das Stickstoff-basierte Flammschutzmittel aus der Gruppe, bestehend aus Melamin und Harnstoffen, oder Kombinationen davon, ausgewählt ist,
das Organophosphor-Flammschutzmittel aus der Gruppe, bestehend aus Tris(chlorethyl)phosphat (TCEP), Tri(chlorpropyl)phosphat (TCPP), Tris(dichlorisopropyl)phosphat (TDCPP), Triphenylphosphat (TPP), Tris(2-ethylhexyl)phosphat (TEHP) und Trikresolphosphat (TKP), oder Kombinationen davon, ausgewählt ist, und
das anorganische Flammschutzmittel aus der Gruppe, bestehend aus Aluminiumhydroxid, Magnesiumhydroxid, Ammoniumphosphat, Ammoniumpolyphosphat, Ammoniumsulfat, Trinatriumphosphat, Hexametaphosphat, Dipentaerythydrit, oder Kombinationen davon, ausgewählt ist.

5. Holzwolle-Leichtbauelement nach einem der Ansprüche 1 bis 4, umfassend Holzwollefasern in einer Menge von 10 bis 65 Gew.-%, eine Bindemittelzusammensetzung in einer Menge von 2 bis 60 Gew.-%, nicht brennbare inerte Füllstoffe in einer Menge von 3 bis 65 Gew.-% und Flammschutzmittel in einer Menge von 0.1 bis 35 Gew.%, jeweils bezogen auf das Gesamtgewicht des Holzwolle-Leichtbauelements.

6. Holzwolle-Leichtbauelement nach einem der Ansprüche 1 bis 5, wobei das Bindemittel kaustischen Magnesit, Portlandzement, Tonerdezement, Weißzement, Gips, Ecose^{®}, Kunstharze, oder Kombinationen davon, und gegebenenfalls einen oder mehrere Reaktionsbeschleuniger, Bindungspartner und/oder Fließmittel umfasst.

7. Holzwolle-Leichtbauelement nach einem der Ansprüche 1 bis 6, mit einer Rohdichte im Bereich von 150 kg/m³ bis 1000 kg/m³.

8. Holzwolle-Leichtbauelement nach einem der Ansprüche 1 bis 7, wobei das Holzwolle-Leichtbauelement die Anforderungen der Brandklasse A1 gemäß EN 13501-1 (2009) erfüllt.

9. Verfahren zur Herstellung eines Holzwolle-Leichtbauelements nach einem der Ansprüche 1 bis 8, umfassend die Schritte:
(a) Bereitstellen von Holzwollefasern,
(b) Imprägnieren der Holzwollefasern mit mindestens einem Flammschutzmittel,
(c) Hinzufügen von mindestens einem nicht brennbaren inerten Füllstoff,
(d) Hinzufügen einer Bindemittelzusammensetzung und
(e) Pressen der unter Schritt (d) erhaltenen behandelten Holzwollefasern unter Einwirkung von Wärme,
wobei der Schritt (b) des Imprägnierens der Holzwollefasern mit dem mindestens einen Flammschutzmittel vor Schritt (c) und/oder nach Schritt (e) des vorstehend definierten Verfahrens durchgeführt werden kann.

10. Verbundelement, umfassend mindestens zwei Schichten, wobei mindestens eine Schicht ein Holzwolle-Leichtbauelement nach einem der Ansprüche 1 bis 8 ist.

11. Verbundelement nach Anspruch 10, wobei die mindestens zweite Schicht ein nicht brennbares Dämmmaterial ist, ausgewählt aus der Gruppe, bestehend aus Glaswolle, Steinwolle und Keramikfasern, sowie anorganischen Schaummaterialien wie Silikatschäumen, Vermiculiten, Blähton, Bims, Keramikschäumen, Kieselsäuren und Aerogelen.
